# EUROPEAN PATENT APPLICATION

(11) **EP 4 159 992 A1**
(43) Date of publication of application: **05.04.2023**
(21) Application number: 21306353.0
(22) Date of filing: 30.09.2021
(51) Int. Cl.: F02C 9/28

(54) **TURBINE DEVICE**

(71) Applicant: MEAS France, 31027 Toulouse Cedex 3 (FR)
(72) Inventor: DURUPT, Emilien, 31027 Toulouse (FR); ANDREU, Damien, 31027 Toulouse (FR)
(74) Representative: Grünecker Patent- und Rechtsanwälte PartG mbB

(57) **Abstract**

Turbine device and a related method for operating a turbine device. The turbine device comprises a compressing means (7), a combustion means (9), a control means (33) and a sensing means (35) for sensing humidity of the fluid, wherein the sensing means senses humidity of compressed fluid, and the control means is configured to control fuel supply based on sensed humidity. The device and method allows for improved combustion temperature control and higher fuel efficiency.

## Description

The present invention relates to a turbine device and a method of operating a turbine device.

Turbine devices are known in the art and are used to extract drive power from the energy released in a combustion reaction of a fuel with an oxidizing agent contained in a working fluid. These devices are implemented in various applications, for example as part of engines to drive aircraft, motor vehicles, sea vessels, helicopters, or in power plants to drive the electrical generators. Device control units are used to control the combustion reactions of said turbine devices. The device control units collect and process a number of machine data points, such as for example turbine rounds-per-minute, device temperatures, device pressures or throttle lever position, to control device operating parameters.

The characteristics of the working fluid influence the device operation and performance. In particular, the composition of the working fluid may include a portion of water, which can significantly affect the drive power generated. On the one hand, liquid water in the form of droplets or condensation can reduce compression efficiency, thermal cycle efficiency or compressor blade lifespan, and interfere with pressure instrumentation. On the other hand, water contained in the working fluid in the form of vapour modifies said fluid's thermodynamic properties. In particular is modified the fluid's specific heat capacity at constant pressure, which impacts the temperature resultant from the combustion reaction. The combustion temperature in turn determines drive power, fuel efficiency, as well as the quantity and proportion of pollutant combustion emissions.

At the same time, many turbine devices are at risk of being subjected to significant swings in the water content of the working fluid, in line with ambient conditions at the location of the device. For turbine devices using ambient air as working fluid, such swings may commonly result from seasonalities, climate fluctuations, shifts in device altitude or meteorological eventualities.

This presents a difficulty for the control of fuel quantity supplied to the combustion means for combustion with the working fluid. Conventional techniques have sought to remedy this difficulty, for example by modelling humidity based on temperature values. However, these techniques present inherent limitations to accuracy and reliability of the drive power obtained from a specific fuel control.

In view of the above, it is the object of the present invention to propose a turbine device with improved fuel control, and thus improved fuel efficiency and combustion emission control.

This object is achieved with the turbine device according to claim 1. Such a turbine device comprises a fluid compressing means for compressing fluid, a fuel supply means for supplying fuel to a combustion means configured to combust a mixture of the compressed fluid and the supplied fuel, and is characterised in further comprising a sensing means for sensing humidity of the compressed fluid and a control means configured to control the supply of the fuel based on the sensed humidity.

By providing said sensing means, the water content of the turbine device working fluid can be determined with accuracy and reliability at a post-compression stage. At this stage, working fluid properties are relevant for combustion control. The knowledge of the water fraction allows for improved determination of fuel quantity needed to achieve a desired combustion temperature, and thus improved control of power output, fuel efficiency, and pollutant emission. The sensing means may take the form of any apparatus with the ability to provide an output signal in direct relationship with a value representative of water fraction in the working fluid, such as relative humidity, absolute humidity or similar.

Sensing the humidity of the compressed fluid directly provides a humidity value that is independent of the use of additional measurements or physical properties. Thus, fewer implementation efforts and computational steps for determination of post-compression working fluid water content are required. The humidity determination is therefore more reliable and less prone to accuracy-diluting error factors.

According to one embodiment, the sensing means can comprise at least one capacitive and/or resistive humidity sensing element. Capacitive and/or resistive sensing technologies provide sensors which have good accuracy, while at the same time being compact and easy to mount. They are also suitable to be integrated in already designed turbines devices.

In an embodiment, a sensing means of capacitive nature can comprise an inorganic dielectric layer as sensing element. This type of sensing element may allow for higher durability and resistance to chemical ageing effects of the sensor, as opposed to for example sensing elements based on organic polymers. This is particularly of interest in the aggressive environments which typically occur close to a combustion location of a turbine device. Such a harsh environment may result from high temperature and/or high pressure or from mechanical stress from vibration and flow turbulence. Further, inorganic layer-based sensors may provide response times superior to those of conventional polymeric humidity sensor devices, thus improving control effectiveness.

In an embodiment, the device's humidity sensing means could comprise interdigitated electrodes formed over said inorganic dielectric sensing layer. This type of electrode arrangement may be particularly suitable to convenient and cost-efficient mass production.

In an embodiment, the sensing means may be arranged between the fluid compressing means and the combustion means. In such an arrangement, the humidity of the working fluid is sensed in its compressed state just before combustion. At the same time the measurement is less at risk of being contaminated by the effects of the combustion, in particular the change of constitution of the working fluid resulting from the combustion. This arrangement would thus allow for an especially representative measurement of working fluid humidity for combustion.

In an embodiment, the sensing means can be configured to operate at temperatures which exceed 250°C, preferably exceed 325°C and, even more in particular exceed 400°C. In such a configuration, the sensing means is suited for sensing close to the combustion, for example between a compressor outlet and a combustor inlet of an engine, where such temperatures conditions typically occur.

In an embodiment, the sensing means may be configured to operate at pressures which exceed 15bar, preferably above 20bar and even more in particular above 25bar. In such a configuration, the sensing means is suited for sensing close to the combustion, for example between the compressor outlet and the combustor inlet, where such pressure conditions typically occur.

The herein described inventive device can be used for multiple purposes and applications. In one embodiment, the turbine device may be comprised in an engine further comprising a ducted fan or a propeller. Such an engine could drive a vehicle, such as an airplane, a helicopter or a sea vessel, with improved humidity sensing. Alternatively, said engine could be an automotive piston engine equipped with a turbocharger. This could reduce fuel consumption and thus operational costs and ferry range of said vehicle.

In a further embodiment, the herein described inventive device may be comprised in a generator, for example as part of a gas power plant. Such a generator may operate with high levels of water content in the working fluid and thus benefit particularly from accurate humidity sensing data of the working fluid after compression in order to control combustion pollutant emission.

The above-mentioned object is also addressed by providing a method according to claim 10 of operating a turbine device, in particular a turbine device according to any one of claims 1 to 9, comprising the steps of compressing fluid, supplying fuel, combusting the compressed fluid and supplied fuel, characterised in further comprising the steps of sensing humidity of the compressed fluid and of controlling the supply of the fuel based on the sensed humidity. Said method may provide for improved fuel control by means of more representative humidity measurements of the working fluid.

Said method may include sensing of the humidity of the compressed fluid between a compression means and a combustion means. This provides for a sensing of fluid humidity in its compressed state before combustion stage, said sensing thus being less at risk of being contaminated or compromised by the effects of the combustion, in particular the change of constitution of the working fluid resulting from the combustion. This arrangement would therefore allow for a representative measurement of working fluid humidity for combustion.

Said method may include sensing of the humidity of the compressed fluid at fluid temperatures above 250°C, preferably above 325°C and even more in particular above 400°C. Similarly, said method may further include sensing of the humidity of the compressed fluid at fluid pressures above 15bar, preferably above 20bar and even more in particular above 25bar. As described further above, sensing at these conditions may be suitable for sensing close to the combustion location, for example between the compressor outlet and the combustor inlet, where such conditions typical occur.

These, as well as other objects and advantages of this invention will be more completely understood and appreciated by careful study of the following more detailed description of the presently preferred exemplary embodiments of the invention taken in conjunction with accompanying drawings, in which:
Figure 1 shows a cross-sectional view of an embodiment of the turbine device according to the invention.
Figure 2 displays views of an embodiment of a sensor for sensing humidity according to the invention.
Figure 3 illustrates schematically an example of the method according to claim 10.

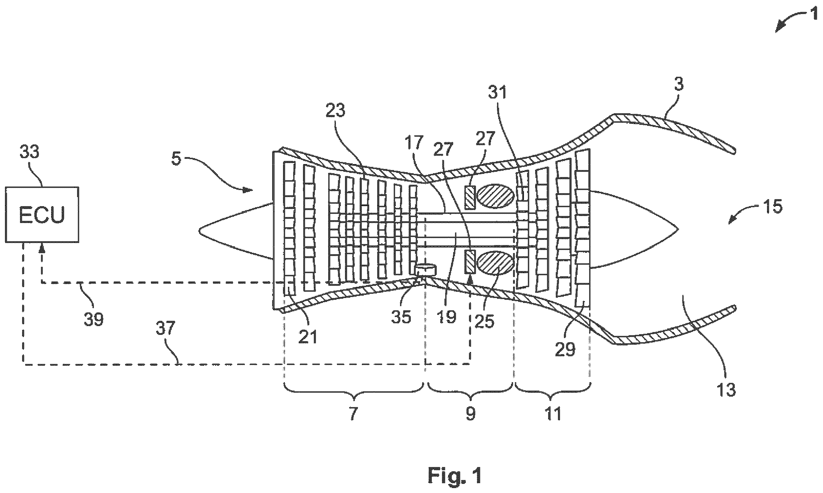

Figure 1 displays a cross-sectional view of an embodiment of the turbine device according to the invention. In this embodiment, the turbine device 1 comprises a nacelle 3, an inlet 5 with a fluid compressing means 7, a combustion means 9, a turbine section 11, a nozzle 13 and an outlet 15. The turbine device 1 illustrated is a jet engine, which may be designated as twin-spool turbojet. However, the invention can be applied to any kind of turbine device, such as a turbofan engine, turboprop engine, turboshaft engine, an automotive engine equipped with a turbocharger or an electrical generator gas turbine. In this embodiment, the working fluid, namely ambient air delivered from the inlet 5, is subjected to a pressure increase by compression in the compressing means 7 and a temperature increase by heat energy supply in the combustion means. Expansion of the heated and pressurized fluid through the turbine section 11 produces torque onto shafts 17 and 19, and expansion in the nozzle 13 produces thrust onto the nacelle 3.

The compressing means 7 accelerates fluid delivered from the inlet 5 and converts the resulting kinetic energy into potential energy of pressure. It comprises for a first compression stage a low pressure compressor 21 arranged on an inner low pressure shaft 19, and a high pressure compressor 23 arranged on an outer high pressure shaft 17 for a second compression stage. The compression ratio of the device is a critical parameter of overall thermal cycle efficiency. Resulting pressures after compression may exceed 25bar.

The combustion means 9 is arranged downstream the compressing means and comprises a combustor 25, which is linked to a fuel supply means 27. The combustor 25 serves as a combustion chamber where the combustion reaction occurs. Combustion occurs between the compressed fluid, here compressed air, and a fuel, *exempli gratia* kerosene, injected by the fuel supply means 27. The fuel supply means 27 is responsible for delivering fuel to the combustor for the combustion reaction. The fuel supply means 27 may draw fuel via a flow link from a fuel reservoir (not shown) and supply it to the combustor 25 via a fuel injector (not shown). The combustion means 9 may further include diffusion means, swirling means, ignition means, *et alia* which are not represented in figure 1.

The turbine section 11 downstream the combustion means 9 comprises a low pressure turbine 29 and a high pressure turbine 31. The low pressure turbine 29 and the low pressure compressor 21 are mounted on the common low pressure shaft 19. The high pressure turbine 31 and the high pressure compressor 23 and mounted the separate outer high pressure shaft 17 coaxially aligned over the low pressure shaft 19. As the shafts 17 and 19 rotate mechanically independently, the low and high pressure compressors 21 and 23 are driven by separate turbines 29 respectively 31, which allows for higher compression ratios while avoiding stability problems at low flow rates.

The turbine device further comprises a control means 33. Typically, the control means 33 takes the form of a digital computer called electronic control unit (ECU). However, the control means may comprise any combination of digital, hydro-mechanical, electronic, or other means. The ECU may be integrated in a larger control system such as a Full Authority Digital Electronic Control (FADEC) system, which controls all aspects of a vehicle. The control means 33 is used to control the fuel supply means 27.

According to the invention, the turbine device 1 further comprises a sensing means 35 for humidity sensing. In this embodiment of Figure 1, the sensing means 35 for sensing humidity is a humidity sensor placed on an inner surface of the nacelle 3 in between the compressing means 7 and the combustion means 9. The sensing means, could, however, also be positioned differently, for example on a surface of the outer shaft 17, or in between low-pressure compressor 21 and high-pressure compressor 23, or adjacent to the combustor 25 inlet, or inside the combustion means 9 adjacent to a combustor 25 casing.

In a preferred embodiment, the sensing means 35 comprises a capacitive and/or resistive sensing element. These sensing elements experience a change in capacitance and/or according to with water vapor and this effect can be used to determine humidity. This type of sensing means provides good accuracy, while being compact and easy to mount. Thus, it is particularly suitable to be integrated in already designed and currently manufactured turbines devices. Sensing means may use porous or non-porous, inorganic, metallic or nanostructured thin films as sensing elements.

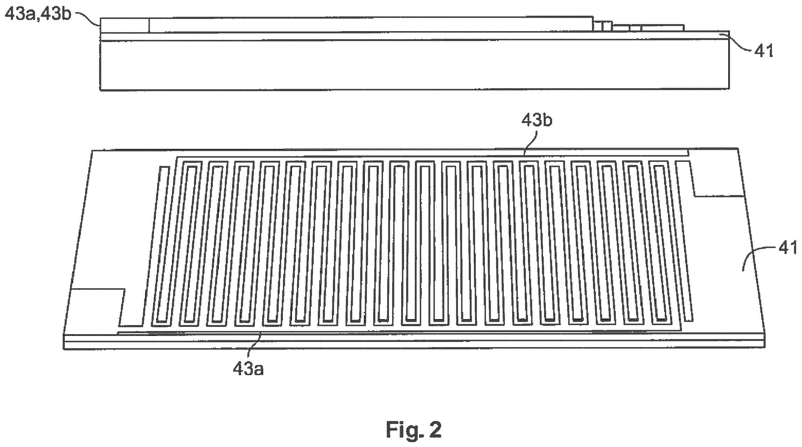

Figure 2 illustrates such a humidity sensor which may be used as sensing means 35 for sensing humidity in a preferred embodiment. The sensor comprises a capacitive sensing element 41 in the form of an inorganic dielectric layer and provides fast sub-second sensing response times, as well as high resistance to harsh environments. Thus, the inorganic dielectric layer sensor of Figure 2 is suited to the aggressive environments that occur after compression and/or close to the combustion, of the turbine device 1. In particular, these sensors can be configured to operate at temperatures above 400°C and pressures above 25bar found in said post-compression environments. Examples of such sensors are described in EP 3 495 807 A1 or EP 3 584 570 A1, their description is included herewith by reference.

In a further refinement of previous embodiment, said inorganic dielectric layer 41 may be arranged with interdigitated electrodes 43a, 43b as shown in Figure 2. This type of combination may be conveniently and cost-efficiently mass-produced with common industrial semiconductor manufacturing or high-yield microfabrication techniques. EP 3 812 754 A1 provides an example of such a sensor, the description of which is incorporated by reference.

The sensing means 35 provides an output signal 37, which may take electrical, mechanical, electromagnetic or any further conceivable form and is relayed to control means 33 as shown in the embodiment of figure 1. The control means 33 receives an input 37 in form of a signal representative of working fluid humidity from the sensing means 35, and controls fuel supply by means of an output signal 39 as a lever of regulation for the fuel flow, for example using a signal destined to a fuel injector pressure pump (not shown). The control means 33 determines the fuel quantity to be supplied for combustion, and may further determine mode and location of fuel supply.

Typically, control means take into account various input data to determine the quantity of fuel to be injected. According the invention, the control means 33 takes into account an accurate humidity value of the compressed working fluid from the sensing means 35. This is generally beneficial for control of one or more device parameters, as the water content of the working fluid influences its primary physical properties such as molecular weight and density. In particular, the water content determines the specific heat capacity at constant pressure of the working fluid, and consequently the amount of heat that must be delivered so as to obtain a desired temperature increase. Since, in the context of a turbine device thermodynamically modeled as heat engine, fuel supply destined to combustion means may be idealized as heat supply, such a humidity measurement of the compressed working fluid is particularly of interest for control of the combustion reaction. By more accurately determining the working fluid's specific heat capacity can be consequently more accurately predicted the combustion reaction dynamic in relation to fuel quantity provided for combustion. A higher level of 'tuning' or calibrating of combustion temperatures around optimal target temperatures is thus possible.

As a particular advantage of this invention, the improved level of control of the combustion temperatures may permit the reduction of safety tolerances included in the maximal temperature design points with respect to critical metallurgical limits. As device materials are subjected to creep effects, high temperatures may deform or meld device components, in particular the highly stressed metallic blades of turbines 29 and 31 in contact with the heated combustion means 9 exhaust fluid. Thus, material creep strength and life span requirements impose critical temperature values which limit maximal allowable temperature, and thus peak power output. An improved level of control of the combustion temperature may thus increase maximal device power output, which may in turn reduce specific fuel consumption of the device.

An additional particular advantage drawn directly from improved control of the combustion temperature is obtained with regard to pollutant emissions exhausted from the turbine device 1. Higher fuel efficiencies of a hydrocarbon combustion reaction implies lower emissions of greenhouse gases such as water vapor and carbon dioxide, as well as lower emission of unburnt fuel. Further, it has been established that the temperature of a hydrocarbon-fuel combustion reaction has a strong influence on the constitution of reaction byproducts, such as nitrogen oxides, carbon monoxide or ozone. Thus, improved control of combustion temperatures may improve the achievement of pollutant emission targets.

It must be noted that a large variety of device configurations, and in particular of compressing means 7 and turbine section 11 arrangements, have been conceived and may be applied to the present invention. Alternative embodiments may include variation of the number of rotors per turbine or compressor, the addition of further spools of compressor or of turbine, addition of stator blades to the nacelle for compression, addition of gears for adaptation of shaft power transmission or direction, non-axial alignments of the flow series, alternative compressor technologies such as centrifugal or mixed-flow compression, the addition of a cooling mechanism for the turbine blades, of an afterburners post-turbine-section, of water injection into the compression section, of variable stator blades to the compressing means, and many more.

Typically multiple-shaft arrangements may be more adapted when variable speed loads and easy starting is required, such as in vehicles. For example, in an embodiment of the turbine device 1, the twin-spool device of figure 1 can be arranged according to claim 8 to drive a ducted fan mounted coaxially on the inner low-pressure shaft 19, such as in turbofan engines. Similarly, the turbine device can in other embodiments be arranged to drive a propeller such as in turboshaft or turboprop engine, advantageously with an adaptable power transmission through a gear box.

A further beneficial arrangement can be conceived according to claim 9, wherein a generator is powered by the turbine device of the invention. Single-shaft arrangements may be more adapted to stationary high base-load power generation requirements of such ground-based turbines. The stringent requirements of low emissions placed upon said generators, while demanding stable operation, make accurate humidity measurement particularly useful for accurate combustion temperature control.

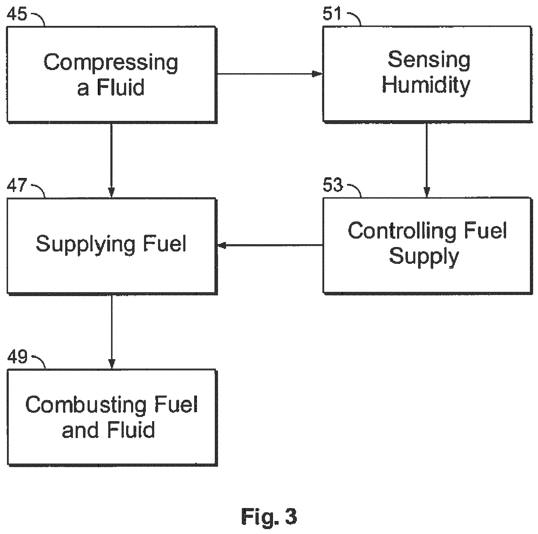

A method of operating a turbine device will now be described with reference to figure 3 according to a second embodiment of the invention. For example, the turbine device according to the first embodiment as illustrated in Figure 1 may be operated according to the inventive method. As shown in figure 3, several steps are performed in sequence. The method starts with process step 45 of compressing a fluid. For example is compressed a fluid serving as working fluid of a turbine device 1, wherein said fluid entered via the inlet 5 and is compressed by the compressing means 7.

In step 47 fuel is supplied and mixed with the compressed fluid, so as to provide conditions for a combustion reaction to occur. For example, a fuel supply means 27 delivers fuel via pressurized injection to a combustor 25, where said fuel is mixed with the compressed fluid. In step 49, said mixture of fluid and fuel is combusted, for example in a combustion means 9.

According to the invention, the humidity of the fluid compressed in step 45 is sensed in a further step 51. In this embodiment of the method, the step 51 of sensing humidity is enacted between a compressing means and a combustion means, such as items 7 and 9 of figure 1, thus within a rather harsh environment. Sensing takes place at temperatures which exceed 400°C and pressures which exceed 25bar, such as may occur in typical operation of the turbine device embodiment of figure 1.

In a further step 53, the quantity of fuel supplied in step 47 is controlled according to the humidity content sensed in step 51. With this method, the turbine device can be operated with an improved accuracy of combustion temperature control. As described in the previous part relating to the turbine device, operating the control based on the sensed humidity values provides the benefit of allowing an increase of peak power output and reducing specific power consumption of the device.

Modifications to the embodiments and combinations of embodiments of the invention described in the forgoing are possible without departing from the scope of the invention as defined by the scope of the accompanying claims. Expressions such as "including", "comprising", "consisting of", "have", and "is" used to describe and claim the present invention are intended to be construed in a non-exclusive manner, namely allowing for items, components or elements not explicitly described also to be present. Reference to the singular is also construed to be related to the plural.

### Reference numerals:

| | |
|---|---|
| ▪ 1: | Turbine device |
| ▪ 3: | Nacelle |
| ▪ 5: | Inlet |
| ▪ 7: | Compressing means |
| ▪ 9: | Combustion means |
| ▪ 11: | Turbine section |
| ▪ 13: | Nozzle |
| ▪ 15: | Outlet |
| ▪ 17: | Outer high pressure shaft |
| ▪ 19: | Inner low pressure shaft |
| ▪ 21: | Low pressure compressor |
| ▪ 23: | High pressure compressor |
| ▪ 25: | Combustor |
| ▪ 27: | Fuel supply means |
| ▪ 29: | Low pressure turbine |
| ▪ 31: | High pressure turbine |
| ▪ 33: | Control means |
| ▪ 35: | Sensing means for sensing humidity |
| ▪ 37: | Sensing means output signal |
| ▪ 39: | Control means output signal |
| ▪ 41: | Inorganic dielectric layer sensing element |
| ▪ 43a, 43b: | Sensor interdigitated electrodes |
| ▪ 45: | Compressing a fluid |
| ▪ 47: | Supplying fuel |
| ▪ 49: | Combusting the compressed fluid and the supplied fuel |
| ▪ 51: | Sensing humidity of the compressed fluid |
| ▪ 53: | Controlling the fuel supply based on the sensed humidity |

## Claims

1. A turbine device comprising:
a fluid compressing means (7) for compressing fluid;
a fuel supply means (27) for supplying fuel to a combustion means (9) configured to combust a mixture of the compressed fluid and the supplied fuel;
**characterised in further comprising** a sensing means (35) for sensing humidity of the compressed fluid and a control means (33) configured to control the supply of the fuel based on the sensed humidity.

2. Turbine device according to claim 1, wherein the sensing means (35) comprises at least one capacitive and/or resistive humidity sensing element (41).

3. Turbine device according to claim 2, wherein said sensing element (41) is an inorganic dielectric sensing layer.

4. Turbine device according to claim 3, wherein the sensing means comprises at least one pair of interdigitated electrodes (43a, 43b) formed over the inorganic dielectric sensing layer (41).

5. Turbine device according to any one of the previous claims, wherein the sensing means is arranged between the fluid compressing means (7) and the combustion means (9).

6. Turbine device according to any one of the previous claims, wherein the sensing means (35) is configured to operate at temperatures above 250°C, preferably above 325°C and even more in particular above 400°C.

7. Turbine device according to any one of the previous claims, wherein the sensing means (35) is configured to operate at pressures above 15bar, preferably above 20bar and even more in particular above 25bar.

8. Engine comprising a turbine device (1) according to any one of claims 1 to 7 and comprising a ducted fan and/or propeller.

9. Generator comprising a turbine device (1) according to any one of claims 1 to 7.

10. Method of operating a turbine device, in particular a turbine device according to any one of claims 1 to 9, comprising the steps of
a) compressing a fluid;
b) supplying fuel;
b) combusting the compressed fluid and the supplied fuel;
**characterised in further comprising** a step of d) sensing the humidity of the compressed fluid, and a step of
e) controlling the supply of the fuel based on the sensed humidity.

11. Method according to claim 10, wherein the compressed fluid humidity is sensed between a compressing means and a combustion means.

12. Method according to claim 10 or 11, wherein humidity of the compressed fluid is sensed at fluid temperatures above 250°C, preferably above 325°C and even more in particular above 400°C.

13. Method according to any one of claims 10 to 12, wherein humidity of the compressed fluid is sensed at fluid pressures above 15bar, preferably above 20bar and even more in particular above 25bar.
